# EUROPEAN PATENT SPECIFICATION

(11) **EP 1 164 490 B1**
(45) Date of publication and mention of the grant of the patent: **13.09.2006**
(21) Application number: 01305070.3
(22) Date of filing: 11.06.2001
(51) Int. Cl.: G06F 12/06, G06F 12/02

(54) **Re-configurable memory map for a system on a chip**
Rekonfigurierbare Speicherabbildung für ein System auf einem Chip
Mappage de mémoire reconfigurable pour un système sur une puce

(30) Priority: 12.06.2000 US 211094 P; 22.09.2000 US 668202
(43) Date of publication of application: 19.12.2001
(73) Proprietor: ALTERA CORPORATION, San Jose, California 95134 (US)
(72) Inventor: May, Roger, Bicester, Oxfordshire (GB); Draper, Andrew, Chesham, Buckinghamshire (GB)
(74) Representative: Cross, Rupert Edward Blount

(56) References cited:
- EP-A- 0 661 637
- FINKELSTEIN E ET AL: "Implementation of PCI-based systems using programmable logic" IEE PROCEEDINGS: CIRCUITS DEVICES AND SYSTEMS, INSTITUTION OF ELECTRICAL ENGINEERS, STENVENAGE, GB, vol. 147, no. 3, 8 June 2000 (2000-06-08), pages 171-174, XP006013853 ISSN: 1350-2409

## Description

This invention relates to re-configurable memory map for a system on a chip.

### BACKGROUND OF THE INVENTION

The present invention relates to digital systems. More specifically, the present invention relates to a memory map for a system on a chip (SoC).

The basic components, which comprise a conventional digital microcomputer system include a clock generator, a microprocessor, program memory (i.e. read only memory (ROM)), data memory (i.e. random access memory (RAM)), and a peripheral interface. The peripheral interface operates to interface input/output (I/O) devices (i.e. peripheral devices), such as printer, keyboard and display units, to the system bus. The microprocessor communicates with other elements of the system via parallel signal lines, which taken together, comprise an internal system bus. The system bus is normally referred to in terms of its functionality, i.e. address bus, data bus and control bus. The microprocessor addresses memory (i.e. program memory and data memory) via an address bus. It also addresses peripheral devices (accessed via a peripheral interface) via address bus, since the memory and peripheral devices are effectively configured in parallel. Systems designed in manner described above are said to have memory-mapped I/O, since the microprocessor accesses memory and peripheral devices based on the addressing scheme described.

The total set of addresses that microprocessor can generate is commonly referred to as the "address space" of the system. When a conventional microprocessor-based system is designed the address space is predefined or "fixed." In other words, all the addresses, for both the memory and peripheral devices are permanently fixed within the address space of the system. Once these address characteristics have been fixed, addressing conforms to a fixed address map (sometimes also referred to as a "memory map," even though non-memory peripheral devices are included within the map).

Implementation of PCI-based systems using programmable logic - IEE Proc.-Circuits Devices Syst.,Volume 147, Number 3 June 2000, page 171 - 174 describes a method of mapping memory address base onto base address registers.

### SUMMARY OF THE INVENTION

According to the present invention a re-configurable memory map and its associated method of re-configuration is disclosed for a system that comprises an embedded processor, a reprogrammable memory and a programmable logic array (e.g. a PLD).

According to the preferred embodiment of the present invention there is provided a digital system as described in claim 1.

The following detailed description and the accompanying drawings provide a better understanding of the nature and advantages of the present invention.

### BRIEF DESCRIPTION OF THE DRAWINGS

FIG. 1 shows an exemplary block diagram of a digital system 10, illustrating an environment of which embodiments of the present invention may be associated;
FIG. 2 shows another exemplary block diagram of a digital system, illustrating an alternative system 20 of which embodiments of the present invention may be associated;
FIG. 3 shows an exemplary block diagram of a digital system, illustrating an alternative system 30 of which embodiments of the present invention may be associated;
FIG. 4 shows an exemplary physical mapping of resources for a 4GB address space, according to an embodiment of the present invention;
FIG. 5 shows an exemplary reconfigurable register, which specifies a base address, size, and type of access allowed, according to an embodiment of the present invention; and
FIG. 6 shows an example of how reconfigurable registers relate to physical memory, according to an embodiment of the present invention.

### DESCRIPTION OF THE SPECIFIC EMBODIMENTS

The present invention is directed, in particular, to a fully re-configurable memory map for use in, for example, a system on a chip (SoC). Conventional systems have a fixed memory map, meaning that the address space for peripherals and memory are fixed at design time. The present invention provides a user the ability to assign and modify the addressing arrangement, e.g. start (or "base") address and the size (or "region") each memory and peripheral device occupies in the memory map. Before the memory map aspect of the present invention is described, a description of the environment to which the memory map may belong is presented.

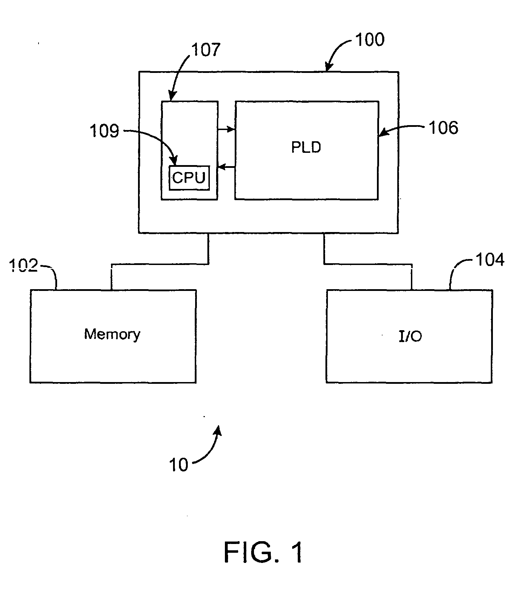

FIG. 1 shows an exemplary block diagram of a digital system 10, illustrating an environment of which embodiments of the present invention may be associated. The system may be provided on a single board, on multiple boards, or even within multiple enclosures. FIG. 1 illustrates a system 10 in which a programmable logic device 106 may be utilized. Programmable logic devices are currently represented by, for example, Altera's MAX®, FLEX®, and APEX^{™} series of PLDs.

In the particular embodiment of FIG. 1, a semiconductor device 100 is coupled to a memory 102 and an I/O 104 and comprises a programmable logic device (PLD) 106 and embedded logic 107, which may includes, among other components, a CPU (or processor) 109. System 10 may be a digital computer system, digital signal processing system, specialized digital switching network, or other processing system. Moreover, such systems may be designed for a wide variety of applications such as, merely by way of example, telecommunications systems, automotive systems, control systems, consumer electronics, personal computers, and others.

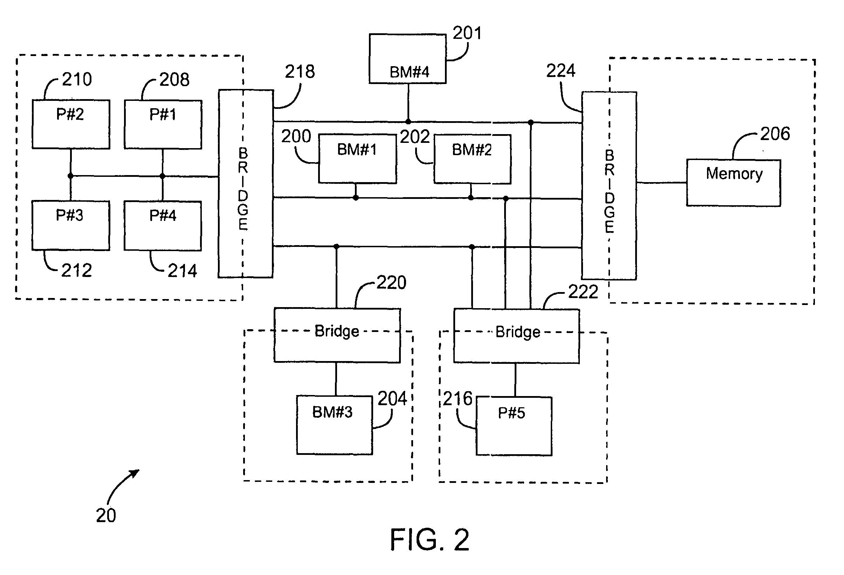

FIG. 2 shows another exemplary block diagram of a digital system 20, illustrating an alternative system 20 of which embodiments of the present invention may be associated. The bus architecture is comprised of bus masters 200, 201, 202 and 204, each of which can communicate with one or more of the peripherals in the system, e.g., memory 206, and other peripherals 208-216 such as, for example, I/O devices, etc., via bridges 218-224. The principle function of each bus master is to manage the bus it is associated with and control what devices can access the bus. Bridges 218-224 function to allow communication between a bus master in a first clock domain with a peripheral in a second clock domain, thereby allowing components on each bridge to operate at their individually optimal speeds. A bridge accomplishes this by preferably including a first-in first-out (FIFO) buffer, which accepts data at the clock rate of a first bridge and writes it out to a second bus at the clock rate of the second bus. So long as each bus master is accessing a different peripheral on a different bus, employment of bus bridges 218-224 leads to enhanced system performance, since multiple bus masters can communicate with different peripherals on different buses simultaneously without the problem of bus access contention. In other words, this embodiment of the present invention provides for the division of processing elements into their own clock domains 226-232 and provides bridges 218-224, which allow communication to other devices on buses across clock domains 226-232. Nevertheless, the bus architecture of system 20 is flexible enough to accommodate multiple bus masters, e.g. bus masters 200 and 202, sharing the same bus. The only condition is that the bus masters run at the same frequency. Each clock domain can derive from independent clock sources or derive from a division of one or more clock sources. Whereas the embodiment in FIG. 2 is shows a certain number of bus masters and peripheral devices, it should be realized that this number is merely exemplary and that a design having any number of bus master, buses, bridges and peripherals is possible and, therefore, within the scope of the present invention.

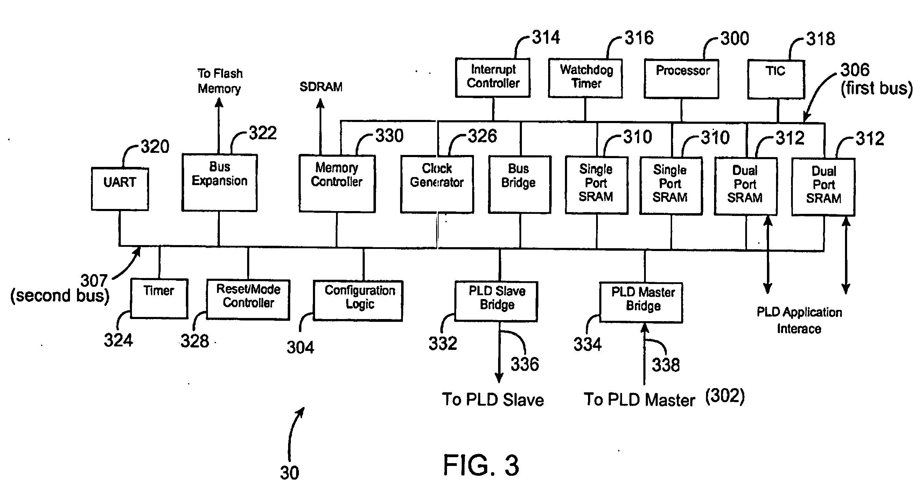

FIG. 3 shows another exemplary block diagram of a digital system 20, illustrating an alternative environment of which embodiments of the present invention may be associated.. Access to peripherals is controlled by a number of bus masters, which are connected by a bus structure comprised of two or more buses, any of which can be, for example, an Advanced High-Performance Bus (AHB), which is a bus that conforms to the Advanced Microcontroller Bus Architecture (AMBA) open standard. In this exemplary environment, there are three bus masters present, including processor 300, PLD Master 302 and Configuration Logic 304. These bus masters 300-304 are capable of initiating read and write operations by providing address and control information. Processor 300 is connected to a first bus 306 (e.g. a 32-bit AHB bus). First bus 306 also connects to one or more peripheral devices such as a synchronous dynamic random access memory (SDRAM) controller 308, on-chip static random access memory (SRAM) (single 310 and dual 312 port), processor only peripherals (e.g. an interrupt controller 314 and a watchdog timer 316). A test interface controller (TIC) 318 can also be connected to first bus 406 for functional testing. The remaining bus masters, which in this example are PLD Master 302 and Configuration Logic 304, share a second bus 307. Second bus 307 can be, for example, a standard 32-bit AHB bus that can provide for an acceptably lower memory access speed, by PLD Master 302 and Configuration logic 304, than may be required for processor 300, which is, as described above, connected to first bus 306. Similarly, peripherals that can be accessed with a relatively larger degree of latency tolerance can be connected to second bus 307. Some of the modules connected to second bus 307 may include, for example, a universal asynchronous transceiver (UART) 320, a bus expansion 322, a timer 324, clock generator 326, a reset/mode controller 328, an SDRAM memory controller 308, and single and dual on-chip static random access memories (SRAMs) 310 and 312. Second bus 307 is also connected to a PLD slave bridge 332 and a PLD master bridge 334, each of which is interfaced to a PLD in the system (not shown in FIG. 3), via third 336 and fourth 338 buses, respectively. Third 336 and fourth 338 buses can be, for example, standard 32-bit AHB buses.

It is to be understood that there are many other system environments in which the memory map aspect of the present invention may be associated. Hence, the multiple bus environments described above are only exemplary and other system environments are possible. For example, a system environment having only a single system bus could be possibly associated with the memory map aspect of the present invention.

Now that exemplary environmental embodiments of the present invention have been described, an exemplary memory map, according to an embodiment of the present invention is described.

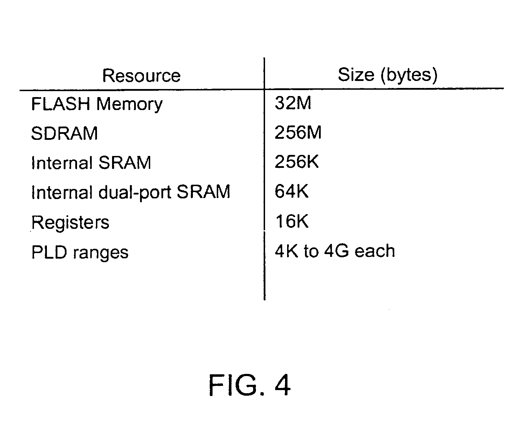

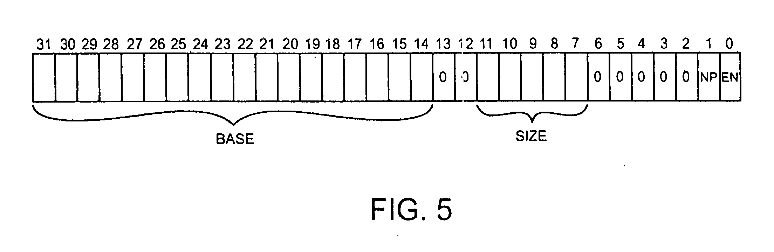

According to an embodiment of the present invention, physical mapping of resources may include assigning a unique address space for components such as, for example, the FLASH memory, SDRAM and single and/or dual port SRAM (as shown in FIG. 3) and/or a PLD. As a particular example, consider the system components shown in FIG. 4. As shown, FLASH memory may reside off-chip, comprise one or more chips and be coupled to a bus expansion module 422. SDRAM may also reside off-chip and be coupled to a memory controller, for example, memory controller 330 shown in FIG. 3. On-chip single and dual-port SRAMS may also be coupled between first 306 and second 307 buses. Although not shown, other devices may be mapped. For example, memory map registers can be mapped, the memory map registers configured to store addressing information for system resources. Some of these components, having exemplary sizes and quantities are summarized in the exemplary 4 GByte memory space shown in FIG. 5. It should be emphasized that the size of the memory map, the type of components, and the size (in bytes) of each component shown is only exemplary.

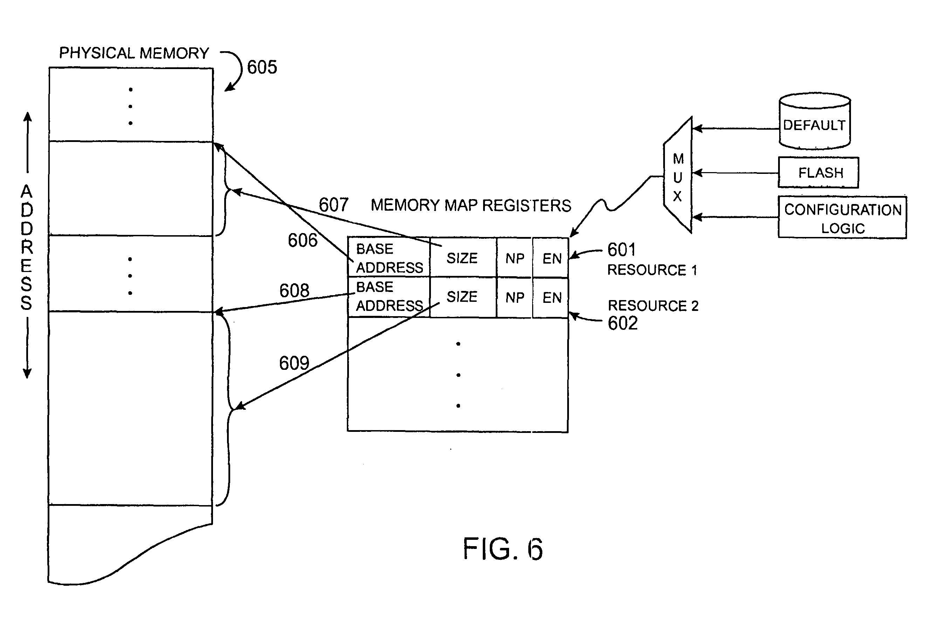

A memory map for the above exemplary components can be specified by a number of reconfigurable memory map registers. Generally, each register specifies a base address, size, and type of access, as shown, for example, for the 32-bit register in FIG. 6. This exemplary 32-bit address allows for an address space of 4 GBytes. In the exemplary system 30 in FIG. 3, the registers may be accessed from second bus 307 so that they can be accessed by either processor 300 or configuration logic 304. A user may set or modify the base address, address range, pre-fetch status and the enabling/disabling of the address range of each memory component or peripheral.

The label "EN" above the 0th bit of the register in FIG. 6 means that the decoding of the memory range associated with that particular register is enabled if the bit is set. The 1st bit in the register (labeled "NP", i.e. no pre-fetch) controls how a bridge (e.g. bridges 318-324 in FIG. 3) may behave when accessing the region associated with the register. If the bit is not set, then access to the region will read ahead (e.g. up to the next 1kB boundary) and writes may be delayed or aggregated for speed. If the bit is set then any access to the region will be delayed until a previous access has completed. The SIZE field of a register denotes the address range for reserved for an associated device and, in this example, follows the following formula: SIZE = log₂(region size) - 1. So, for example, SIZE would equal 19 for a 1MB region. A base address for a device's address range in the register is specified in bits 14 through 31 in the register.

Referring now to FIG. 6, there is shown an example of how memory map registers relate to physical memory, according to an embodiment of the present invention. Two Memory map registers 601, 602 are shown to exemplify this aspect of the invention and it should be understood that any number of registers are possible. Memory map registers 601 and 602 each specify a base address, an address range (i.e. size), enable (EN) and pre-fetch status for resources 1 and 2. The base address and size reserved for resources 1 and 2 are mapped into physical memory 605 as indicated by arrows 606 and 607 and 608 and 609, respectively. Memory map register 601 and 602 can be loaded in accordance with date provided by a default configuration source 610, FLASH memory 612 or configuration logic source 324. The physical location of the memory map registers 601 and 602 are preferably, but not definitively, located in reset/mode controller 328, as shown in the exemplary system 30 in FIG. 3.

In another embodiment of the invention, after a reset operation of the system, a base address is set to some number, for example, 0x7FFFF000. This base address is reconfigurable, so long as the memory range does not overlap the range reserved for other devices. In this example, a minimum range of 16KB must be reserved.

In another embodiment of the invention, the system is powered up, a default memory map specifies a register region for registers used to configure the memory map. In an alternative embodiment, the system can be booted from a FLASH memory.. If FLASH is used, the start address of the FLASH region is mapped, for example, to a reset vector of the system processor (i.e. the vector at which the processor begins executing code). Additionally, if the processor is booted from FLASH, code from the processor can be written to the register area to selectively enable resources such as, for example, on-chip SRAM, PLD Slave interface, etc. (See FIG. 4) and specify the desired address ranges within the memory map. After the memory map is specified, the processor can remove the register region from the memory map by setting a disable bit in the appropriate register.

In yet another embodiment, if the processor is not booted from FLASH, an external configuration device can be coupled to the system and supply the appropriate register patterns. In this situation, patterns are downloaded to the system via a configuration port of configuration logic 404 (See FIG. 4). Configuration logic 404 then writes to the register region on second bus 407. Once downloaded and setting up the memory map in the registers, the processor is allowed to boot starting from its reset vector.

According to another embodiment of the present invention, the flexibility offered by the reconfigurable memory map provides an option to disable all memory regions except those associated with the PLD slave so that all memory accesses by processor 400 will be directed to the PLD (See FIG. 4). This aspect of the invention is useful, for example, prototyping, where a user wishes to map the complete address space (e.g., the entire 4GB address space summarized in FIG. 5) to the PLD. This allows the user to prototype the system with the processor instantiated in the embedded logic and all other hardware in the PLD.

In conclusion, the present invention discloses a reconfigurable memory map method and apparatus, which may be incorporated in a system on a chip. The foregoing description of preferred exemplary embodiments has been presented for the purposes of description.

## Claims

1. A digital system on a semiconductor chip for specifying a memory map, the digital system comprising:
a central processing unit (CPU) (109);
a programmable logic device (PLD) (106) in communication with the CPU (109);
a configuration logic (304);
a plurality of registers configurable by the configuration logic (304) and in communication with the CPU (109), wherein:
the plurality of configurable registers are configured to accept and store base addresses at which system resources, internal or external to the digital system, can be addressed by the CPU (109) or by the configuration logic (304) and address ranges within which the base addresses can be addressed by the CPU (109) or by the configuration logic (304), **characterized in that**:
the digital system allows all of the configurable registers and all address ranges to be disabled, except for a register specifying a base address and an address range for the PLD (106), so that all memory accesses by the CPU (109) must be directed to the PLD (106).

2. The system of claim 1, wherein the address information further comprises the type of access allowed to the address range.

3. The system of claim 1, wherein the CPU (109) is coupled to a first system bus in a first clock domain and the registers are coupled to a second system bus in a second clock domain.

4. The system of claim 1, wherein the configuration logic (304) is coupled to a second system bus and the registers are coupled to the second system bus.

## Patentansprüche

1. Digitales System auf einem Halbleiterchip zur Spezifizierung eines Speicherplans, wobei das digitale System umfasst:
eine zentrale Prozessoreinheit (CPU) (109);
ein programmierbares logisches Bauelement (PLD) (106), welches mit der CPU (109) in Verbindung steht;
eine Konfigurationslogik (304);
eine Mehrzahl von Registern, welche durch die Konfigurationslogik (304) konfigurierbar sind und mit der CPU (109) in Verbindung stehen, wobei:
die Mehrzahl von konfigurierbaren Registern konfiguriert sind, um Basisadressen, an welchen bezüglich des digitalen Systems innere und
äußere Systemressourcen durch die CPU (109) oder durch die Konfigurationslogik (304) adressiert werden können, und Adressbereiche, in welchen die Basisadressen durch die CPU (109) oder durch die Konfigurationslogik (304) adressiert werden können, anzunehmen und zu speichern,
**dadurch gekennzeichnet, dass**:
das digitale System allen konfigurierbaren Registern und allen Adressbereichen ermöglicht, deaktiviert zu werden, außer einem Register, welches eine Basisadresse und einen Adressbereich für das PLD (106) spezifiziert, so dass alle Speicherzugriffe durch die CPU (109) an das PLD (106) gerichtet werden müssen.

2. Das System nach Anspruch 1, wobei die Adressinformation ferner die Art des Zugriffs umfasst, welcher für den Adressbereich erlaubt ist.

3. Das System nach Anspruch 1, wobei die CPU (109) mit einem ersten Systembus in einer ersten Taktdomäne gekoppelt ist und die Register mit einem zweiten Systembus in einer zweiten Taktdomäne gekoppelt sind.

4. Das System nach Anspruch 1, wobei die Konfigurationslogik (304) mit einem zweiten Systembus gekoppelt ist und die Register mit dem zweiten Systembus gekoppelt sind.

## Revendications

1. Système numérique sur une puce de semiconducteur, destiné à spécifier un mappage de mémoire, le système numérique comprenant :
une unité centrale de traitement (CPU, pour « *Central Processing Unit* ») (109) ;
un dispositif logique programmable (PLD, pour « *Programmable Logic Device* ») (106) en communication avec la CPU (109) ;
une logique de configuration (304) ;
une pluralité de registres, configurables par la logique de configuration (304) et en communication avec la CPU (109), dans lequel :
la pluralité de registres configurables sont configurés pour accepter et stocker des adresses de base auxquelles des ressources du système, intérieures ou extérieures au système numérique, peuvent être adressées par la CPU (109) ou par la logique de configuration (304) et des plages d'adresses sur lesquelles les adresses de base peuvent être adressées par la CPU (109) ou par la logique de configuration (304),
**caractérisé en ce que** :
le système numérique permet d'inhiber la totalité des registres configurables et la totalité des plages d'adresses, exception faite d'un registre spécifiant une adresse de base et une plage d'adresses pour le PLD (106), si bien que tous les accès en mémoire de la CPU (109) doivent être envoyés au PLD (106).

2. Système selon la revendication 1, dans lequel les informations d'adresse comprennent en outre le type d'accès autorisé à la plage d'adresses.

3. Système selon la revendication 1, dans lequel la CPU (109) est couplée à un premier bus système dans un premier domaine d'horloge et les registres sont couplés à un second bus système dans un second domaine d'horloge.

4. Système selon la revendication 1, dans lequel la logique de configuration (304) est couplée à un second bus système et les registres sont couplés au second bus système.
